# NEW EUROPEAN PATENT SPECIFICATION

(11) **EP 3 275 002 B2**
(45) Date of publication and mention of the opposition decision: **19.01.2022**
(45) Mention of the grant of the patent: 12.06.2019
(21) Application number: 16704432.0
(22) Date of filing: 12.02.2016
(51) Int. Cl.: H01B 3/40, C08K 5/17

(54) **A PROCESS FOR THE PREPARATION OF INSULATION SYSTEMS FOR ELECTRICAL ENGINEERING, AND THE USE THEREOF**
VERFAHREN ZUR HERSTELLUNG VON SYSTEMEN ZUR ISOLIERUNG VON ELEKTROTECHNIK, SOWIE DEREN VERWENDUNG
PROCÉDÉ DE PRÉPARATION DE SYSTÈMES D'ISOLATION POUR DES ÉQUIPEMENTS ÉLECTRIQUES, ET LEUR UTILISATION

(30) Priority: 26.03.2015 EP 15161029
(43) Date of publication of application: 31.01.2018
(73) Proprietor: Huntsman Advanced Materials Licensing (Switzerland) GmbH, 4057 Basel (CH)
(72) Inventor: BEISELE, Christian, 79379 Müllheim (DE); COLLIARD, Sophie, 68510 Uffheim (FR); SCHOENENBERGER, Catherine, 68510 Sierentz (FR); WILBERS, Hubert, 79650 Schopfheim (DE)
(74) Representative: Weidner Stern Jeschke
(86) International application number: PCT/EP2016/052969
(87) International publication number: WO 2016/150614

(56) References cited:
- EP-A1- 0 839 865
- EP-B1- 0 736 556
- WO-A1-2009/062543
- WO-A1-2010/010048
- WO-A1-2010/010048
- WO-A1-2011/023227
- WO-A1-2011/037895
- WO-A2-2011/097009
- WO-A2-2013/124251
- US-A- 3 754 071
- "Vorbereitung der Gießformen" In: BECKER, BRAUN et al: "Duroplaste. Kunststoff Handbuch", 1988, München Wien pages 515-518,
- BURTON, ALEXANDER et al.: "Epoxy Formulations using Jeffamine® Polyetheramines", Huntsmann Produktbroschüre, April 2005 (2005-04), pages 1-105,
- H. PHAM et al.: "Epoxy Resins", Ullmann's Encyclopedia of Industrial Chemistry, 15 October 2005 (2005-10-15), pages 1-90,
- Anonymous: "Evaluating Electrically Insulating Epoxies", NASA Tech Briefs, vol. 38, no. 11, 1 November 2014 (2014-11-01), pages 1-6,
- Anonymous: "The Jeffamine@ Polyetheramines", HUNTSMAN, 2007, pages 1-6,
- "XTJ-568 technical data sheet", Huntsman, 2012,
- "Technical Bulletin of Jeffamine D230", ,

## Description

The present invention relates to a process for the preparation of insulation systems for electrical engineering, wherein a multiple component thermosetting epoxy resin composition is used. The insulation encased articles obtained by the process according to the present invention exhibit good mechanical, electrical and dielectrical properties and can be used as, for example, insulators, bushings, switchgears and instrument transformers.

Epoxy resin compositions are commonly used for the preparation of insulation systems for electrical engineering. However, most of these epoxy resin compositions utilize anhydrides as curing agents. Due to the developing regulatory framework for chemicals, it is expected that the use of anhydrides in epoxy resins will be restricted in the near future, because of their R42 label (respiratory sensitizer). Therefore, some anhydrides are already on the SVHC candidate list (substances of very high concern) of the REACH regulation. Therefore, it is likely that in some years these substances may no longer be used without special authorisation. As all known anhydrides are R42-labeled and even yet unknown anhydrides would be expected by toxicologists to be also R42-labeled, a solution that is free of anhydrides is desirable.

Amines as curing agents for epoxy resins are well known, in particular, for the preparation of composite materials. However, amine curing agents are often too reactive to be processable in electrical potting or encapsulation applications. As the mass of the epoxy resin composition to be processed increases, control of the exotherm becomes vital. The uncontrolled release of heat from the curing of the thermoset due to its mass may result in the degradation of the thermoset's mechanical properties, or even to thermal decomposition of the thermoset. Also degradation of the mechanical properties of the structural parts in contact with the thermoset is likely to occur. In particular in automatic pressure gelation process (APG), it is important to provide for a lower exothermic peak temperature to control the cure profile, i.e. gelation front within the mold. The cure profile of epoxy resin compositions is inappropriate and the exotherm is too high for application in APG, when amines are used as curing agents.

In order to cope with the problem of an inappropriate cure profile of epoxy resins containing amine curing agents, the use of aromatic amines was suggested. However, today the aromatic amines considered are on the banned substance list which prevents their use in potting or casting applications. As indicated above, other amines, auch as aliphatic amines, are too reactive and do not provide an acceptable gelation profile in APG, which is suitable for the casting of big parts with low shrinkage and low exotherm. Moreover, some properties of the cured products are not competitive with anhydride cured thermosets, such as long term aging, tracking resistance, arc resistance, dielectric properties after humid conditioning. Accordingly, there is a need for new thermosetting, anhydride-free epoxy compositions which advantageously can be used in potting or encapsulation applications for manufacturing of electrical insulation systems having improved properties, which are suitable for switchgear, transformer and other applications.

Accordingly, it is an object of the present invention to provide a process for the preparation of insulation systems for electrical engineering by automatic pressure gelation (APG), wherein anhydride-free, thermosetting epoxy compositions can be used, and the cure profile can be controlled in the desired manner. Still another object of the present invention is to provide the encased articles obtained from the inventive process which exhibit excellent mechanical, electrical and dielectrical properties and can be used, for example, as insulators, bushings, switchgears and instrument transformers in electrical engineering.

Accordingly, the present invention relates to a process for the preparation of insulation systems for electrical engineering by automatic pressure gelation (APG) according to claim 1.

Generally, insulation systems are prepared by casting, potting, encapsulation, and impregnation processes such as gravity casting, vacuum casting, automatic pressure gelation (APG), vacuum pressure gelation (VPG), infusion, and the like,

A typical process for making insulation systems for electrical engineering, such as cast resin epoxy insulators, is the automatic pressure gelation process (APG process). The APG process allows for the preparation of a casting product made of an epoxy resin in a short period of time by hardening and forming the epoxy resin. In general, an APG apparatus to carry out the APG process includes a pair of molds (herafter called mold), a resin mixing tank connected to the mold through a pipe, and an opening and closing system for opening and closing the mold.

Before injection of the curable epoxy resin composition into the hot mold, the components of the curable composition comprising the epoxy resin and the curing agent have to be prepared for injection.

In case of a pre-filled system, i.e. a system comprising components which already contain the filler, it is required to stir the components in the supply tank while heating to prevent sedimentation and obtain a homogeneous formulation. After homogenization, the components are combined and transferred into a mixer and mixed at elevated temperature and reduced pressure to degas the formulation. The degassed mixture is subsequently injected into the hot mold.

In case of a non-pre-filled system, the epoxy resin component and the curing agent component are typically mixed individually with the filler at elevated temperature and reduced pressure to prepare the pre-mixture of the resin and the curing agent. Optionally, further additives may be added beforehand. In a further step, the two components are combined to form the final reactive mixture, typically by mixing at elevated temperature and reduced pressure. Subsequently, the degassed mixture is injected into the mold.

In a typical APG process, a metal conductor or an insert, which is pre-heated and dried, is placed into the mold located in a vacuum chamber. After closing of the mold by an opening and closing system, the epoxy resin composition is injected into the mold from an inlet located at the bottom of the mold by applying pressure to the resin mixing tank. Before injection, the resin composition is normally held at a moderate temperature of 40 to 60°C to ensure an appropriate pot life (usable time of the epoxy resin), while the temperature of the mold is kept at around 120°C or above to obtain the casting products within a reasonably short time. After injection of the epoxy resin composition into the hot mold, the resin composition cures while the pressure applied to the epoxy resin in the resin mixing tank is kept at about 0.1 to 0.5 MPa.

Large casting products made of more than 10 kg of resin may be produced conveniently by the APG process within a short time, for example, of from 20 to 60 minutes. Normally, the casting product released from the mold is post cured in a separate curing oven to complete the reaction of the epoxy resin.

The at least one epoxy resin (A) is a compound containing at least one vicinal epoxy group, preferably more than one vicinal epoxy group, for example, two or three vicinal epoxy groups. The epoxy resin may be saturated or unsaturated, aliphatic, cycloaliphatic, aromatic or heterocyclic and may be substituted. The epoxy resin may also be a monomeric or a polymeric compound. A survey of epoxy resins useful for the use in the present invention can be found, for example, in Lee, H. and Neville, Handbook of Epoxy Resins, McGraw-Hill Book Company, New York (1982).

The epoxy resins, used in embodiments disclosed herein for component (A) of the present invention, may vary and include conventional and commercially available epoxy resins, which may be used alone or in combinations of two or more. In choosing epoxy resins for the compositions disclosed herein, consideration should not only be given to properties of the final product, but also to viscosity and other properties that may influence the processing of the resin composition.

Particularly suitable epoxy resins known to the skilled worker are based on reaction products of polyfunctional alcohols, phenols, cycloaliphatic carboxylic acids, aromatic amines, or aminophenols with epichlorohydrin.

Aliphatic alcohols which come into consideration for reaction with epichlorhydrin to form suitable polyglycidyl ethers are, for example, ethylene glycol and poly(oxyethylene)glycols such as diethylene glycol and triethylene glycol, propylene glycol and poly(oxypropylene)-glycols, propane-1,3-diol, butane-1,4-diol, pentane-1,5-diol, hexane-1,6-diol, hexane-2,4,6-triol, glycerol, 1,1,1-trimethylolpropane, and pentaerythritol.

Cycloaliphatic alcohols which come into consideration for reaction with epichlorhydrin to form suitable polyglycidyl ethers are, for example, 1,4-cyclohexanediol (quinitol), 1,1-bis(hydroxymethyl)cyclohex-3-ene, bis(4-hydroxycyclohexyl)methane, and 2,2-bis(4-hydroxycyclohexyl)-propane.

Alcohols containing aromatic nuclei which come into consideration for reaction with epichlorhydrin to form suitable polyglycidyl ethers are, for example, N,N-bis-(2-hydroxyethyl)aniline and 4,4'-bis(2-hydroxyethylamino)diphenylmethane.

Preferably the polyglycidyl ethers are derived from substances containing two or more phenolic hydroxy groups per molecule, for example, resorcinol, catechol, hydroquinone, bis(4-hydroxyphenyl)methane (bisphenol F), 1,1,2,2-tetrakis(4-hydroxyphenyl)ethane, 4,4'-dihydroxydiphenyl, bis(4-hydroxyphenyl)sulphone (bisphenol S), 1,1-bis(4-hydroxylphenyl)-1-phenyl ethane (bisphenol AP), 1,1-bis(4-hydroxylphenyl)ethylene (bisphenol AD), phenolformaldehyde or cresol-formaldehyde novolac resins, 2,2-bis(4-hydroxyphenyl)propane (bisphenol A), and 2,2-bis(3,5-dibromo-4-hydroxyphenyl)propane.

Another few non-limiting embodiments include, for example, triglycidyl ethers of para-aminophenols. It is also possible to use a mixture of two or more epoxy resins.

The at least one epoxy resin component (A) is either commercially available or can be prepared according to processes known per se. Commercially available products are, for example, D.E.R. 330, D.E.R. 331, D.E.R.332, D.E.R. 334, D.E.R. 354, D.E.R. 580, D.E.N. 431, D.E.N. 438, D.E.R. 736, or D.E.R. 732 available from The Dow Chemical Company, or ARALDITE^{®} MY 740 or ARALDITE^{®} CY 228 from Huntsman Corporation.

The amount of epoxy resin (A) in the final composition is, for example, of from 30 weight percent (wt %) to 92 wt %, based on the total weight of components (A) and (B) in the composition. In one embodiment, the amount of epoxy resin (A) is, for example, of from 45 wt % to 87 wt %, based on the total weight of components (A) and (B). In another embodiment, the amount of the epoxy resin (A) is, for example, of from 50 wt % to 82 wt %, based on the total weight of components (A) and (B).

In a preferred embodiment of the present invention the at least one epoxy resin (A) is a diglycidylether of bisphenol A.

The at least one curing agent component (b1) is a cycloaliphatic amine. The term cycloaliphatic amine denotes cycloaliphatic amines and mixed cycloaliphatic-aromatic amine derivatives, for example, methylene bridged aminobenzyl-cyclohexylamirtes. Examples of cyclohexylamines include 1,2-diaminocyclohexane, 1,4-diaminocyclohexane, bis(4-aminocyclohexyl)methane, bis(3-methyl-4-aminocyclohexyl)methane, bis(3,5-methyl-4-aminocyclohexyl)methane, 2,4-bis(4-aminocyclohexylmethyl)cyclohexylamine, 2,2-bis(4-aminocyclohexyl)propane, 4,4'-bis(4-cyclohexylmethyl)dicyclohexylamine, 2,2-bis(4-amino-3-methylcylohexyl)propane, 3-aminomethyl-3,5,5-trimethylcyclohexylamine (isophorone diamine), 1,4-bis(aminomethyl)cyclohexane, 1,3-bis(aminomethyl)cyclohexane, bicyclo[2.2.1]heptanebis(methylamine) (norbornane diamine), 3,3,5-trimethyl-N-(propan-2-yl)-5-[(propan-2-ylamino)methyl]cyclohexylamine, Jefflink JL 754 available from Huntsman Corporation, 4-aminocyclohexyl-4-hydroxycyclohexylmethane, N-aminoethylpiperazine. Examples of mixed cycloaliphatic-aromatic amines include 4-(4'-aminobenzyl)cyclohexylamine, 2,4-bis(4-aminocyclohexylmethyl)aniline, and, partially hydrogenated trimethylenetetraaniline and analogs thereof and hydrogenated bisaniline A and hydrogenated bisaniline P.

The amount of curing agent component (b1) in the final composition is, for example, of from 1 weight percent (wt %) to 30 wt %, based on the total weight of components (A) and (B) in the composition. In one embodiment, the amount of curing agent component (b1) is, for example, of from 2 wt % to 20 wt %, based on the total weight of components (A) and (B). In another embodiment, the amount of curing agent component (b1) is, for example, of from 3 wt % to 15 wt %, based on the total weight of components (A) and (B).

Preferred cycloaliphatic amines include 1,2-diaminocyclohexane, bis(4-aminocyclohexyl)methane, 3-aminomethyl-3,5,5-trimethylcyclohexylamine (isophorone diamine), 1,3-bis(aminomethyl)cyclohexane, bicyclo[2.2.1]heptanebis(methylamine) (norbornane diamine), Jefflink JL 754, or N-aminoethylpiperazine.

In a particularly preferred embodiment of the present invention, the at least one curing agent component (b1) is 3-aminomethyl-3,5,5-trimethylcyclohexylamine (isophorone diamine) denoted IPD.

The cycloaliphatic amine may be used alone, or, alternatively, mixtures of at least two, for example, two, three or four different cycloaliphatic amines may be used.

The at least one curing agent component (b2) is a JEFFAMINE ^{®} XTJ polyetheramine, which is a primary amine with the terminal end group of the formula 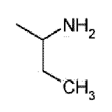 prepared by amination of butylene oxide capped alcohols.

The JEFFAMINE^{®} XTJ-series polyetheramines are slower amines analogous to JEFFAMINE^{®} D-230 and JEFFAMINE^{®} T-403 polyetheramines available as JEFFAMINE^{®} XTJ-568 and JEFFAMINE^{®} XTJ-566, respectively. JEFFAMINE^{®} XTJ-568 is preferred. JEFFAMINE^{®} XTJ polyetheramines are primary amines prepared by amination of butylene oxide capped alcohols. The reaction results in primary amines with the terminal end group of the formula

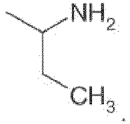

The polyether polyamines may be used alone, or, alternatively, mixtures of at least two, for example, two, three or four different polyether polyamines may be used.

The amount of curing agent component (b2) in the final composition is, for example, of from 2 weight percent (wt %) to 40 wt %, based on the total weight of components (A) and (B) in the composition. In one embodiment, the amount of curing agent component (b2) is, for example, of from 5 wt % to 30 wt %, based on the total weight of components (A) and (B). In another embodiment, the amount of curing agent component (b2) is, for example, of from 5 wt % to 20 wt %, based on the total weight of components (A) and (B).

Particular JEFFAMINE^{®} polyetheramines that may be used as curing agent component (b2) in accordance with the process of the present invention include JEFFAMINE^{®} XTJ-568.

A process according to the present invention is preferred wherein the said resin composition comprises
(A) a diglycidylether of bisphenol A,
(B) a curing agent comprising
   (b1) 3-aminomethyl-3,5,5-trimethylcyclohexylamine (isophorone diamine), and (b2) JEFFAMINE^{®} XTJ-568.

The multiple component thermosetting resin composition according to the process of the present invention may contain one or more fillers generally used in electrical insulations which are selected from the group consisting of metal powder, wood flour, glass powder, glass beads, semi-metal oxides, metal oxides, metal hydroxides, semi-metal and metal nitrides, semi-metal and metal carbides, metal carbonates, metal sulfates, and natural or synthetic minerals.

Preferred fillers are selected from the group consisting of quartz sand, silanised quartz powder, silica, aluminium oxide, titanium oxide, zirconium oxide, Mg(OH)₂, Al(OH)₃, dolomite [CaMg (CO₃)₂], silanised Al(OH)₃, AlO(OH), silicon nitride, boron nitrides, aluminium nitride, silicon carbide, boron carbides, dolomite, chalk, CaCO₃, barite, gypsum, hydromagnesite, zeolites, talcum, mica, kaolin and wollastonite. Especially preferred is silica, wollastonite or calcium carbonate.

The filler material may optionally be coated for example with a silane or a siloxane known for coating filler materials, e.g. dimethylsiloxanes which may be cross linked, or other known coating materials.

The amount of filler in the final composition is, for example of from 30 weight percent (wt %) to 75 wt %, based on the total weight of the thermosetting epoxy resin composition. In one embodiment, the amount of filler is, for example, of from 40 wt % to 75 wt %, based on the total weight of the thermosetting epoxy resin composition. In another embodiment, the amount of filler is, for example, of from 50 wt % to 70 wt %, based on the total weight of the thermosetting epoxy resin composition. In still another embodiment, the amount of filler is, for example, of from 60 wt % to 70 wt %, based on the total weight of the thermosetting epoxy resin composition.

Further additives may be selected from processing aids to improve the rheological properties of the liquid mix resin, hydrophobic compounds including silicones, wetting/dispersing agents, plasticizers, reactive or non-reactive diluents, flexibilizers, accelerators, antioxidants, light absorbers, pigments, flame retardants, fibers and other additives generally used in electrical applications. These additives are known to the person skilled in the art.

The present invention also refers to the use of a multiple component thermosetting resin composition according to claim 7.

Preparation of insulation systems for electrical engineering is often carried out by Automatic Pressure Gelation (APG) or Vacuum Casting. When using known epoxy resin compositions based on anhydride cure, such processes typically include a curing step in the mold for a time sufficient to shape the epoxy resin composition into its final infusible three dimensional structures, typically up to ten hours, and a post-curing step of the demolded article at elevated temperature to develop the ultimate physical and mechanical properties of the cured epoxy resin composition. Such a post-curing step may take, depending on the shape and size of the article, up to thirty hours.

The cure profile and shrinkage can advantageously be controlled in the desired manner, when carrying out the inventive process. Compared to the known epoxy resin compositions based on anhydride cure, shorter curing times and lower mold and curing temperatures can be applied. Moreover, the post-cure time can be substantially shortened and the post-cure temperature lowered, all of which safes process time and energy. A post-cure treatment may even be omitted. The pot life of the thermosetting epoxy resin composition according to the inventive process is sufficient to use common application techniques known in the art. Compared to the known epoxy resin compositions based on anhydride cure, the thermosetting epoxy resin composition according to the inventive process are distinguished by less odor emission. A lower exothermic peak temperature to control the cure profile, i.e, gelation front within the mold, is provided by the process according to the present invention, which is similar to processes carried out with known epoxy resin compositions based on anhydride cure.

The process according to the present invention is useful for the preparation of encased articles exhibiting good mechanical, electrical and dielectrical properties.

Accordingly, the present invention refers to an insulation system article obtained by the process according to the present invention. The glass transition temperature of the article is in the same range as for known high temperature cure anhydride based thermosetting epoxy resin compositions.

Possible uses of the insulation system articles prepared according to the present invention are dry-type transformers, particularly cast coils for dry type distribution transformers, especially vacuum cast dry distribution transformers, which within the resin structure contain electrical conductors; medium and high-voltage insulations for indoor and outdoor use, like breakers or switchgear applications; medium and high voltage bushings; as long-rod, composite and cap-type insulators, and also for base insulators in the medium-voltage sector, in the production of insulators associated with outdoor power switches, measuring transducers, leadthroughs, and overvoltage protectors, in switchgear constructions, in power switches, and electrical machines, as coating materials for transistors and other semiconductor elements and/or to impregnate electrical installations.

In particular the articles prepared in accordance with the inventive process are used for medium and high voltage switchgear applications and instrument transformers (6 kV to 72 kV).

The following Examples serve to illustrate the invention. Unless otherwise indicated, the temperatures are given in degrees Celsius, parts are parts by weight and percentages relate to % by weight. Parts by weight relate to parts by volume in a ratio of kilograms to litres.

### Example 1

A thermosetting resin composition is prepared by using as the epoxy resin component (A) 100 parts of ARALDlTE^{®} MY 740, and as the curing agent component (B) 28 parts of a mixture containing, as component (b1), 8 parts of isophorone diamine and, as component (b2), 20 parts of JEFFAMINE^{®} XTJ-568. A total of 192 parts of Silica W12 (available from Quarzwerke) are used as the filler (60 wt% based on the total weight of the thermosetting epoxy resin composition). Components (A) and (B) are pre-mixed individually with the appropriate quantity of the filler. The premixes of filled components (A) and (B) are feeded into a batch mixer at a temperature of 40°C and injected into the mold preheated to 110 to 120°C and mold temperature is kept at this temperature for 2h at a maximum temperature of 120°C. The exotherm as determined by Differential Scanning Calorimetry on a Mettler SC 822^{e} is 126 J/g.

### Example 2

Example 1 is repeated. However, a total of 238 parts of Silica W12 are used as the filler (65 wt% based on the total weight of the thermosetting epoxy resin composition), instead of 192 parts. Components (A) and (B) are pre-mixed individually with the appropriate quantity of the filler and processed as given in Example 1.

### Comparative Example

For comparison, an ARALDITE^{®} casting resin system commercially available from Huntsman Corporation is used. ARALDITE^{®} casting resin contains 100 parts of ARALDITE^{®} CY 228 (diglycidylether of bisphenol A), 85 parts of Hardener HY 918 (anhydride hardener), 0.8 parts of Accelerator DY 062 (tertiary amine accelerator) and 340 parts of Silica W12 (65 wt% based on the total weight of the thermosetting epoxy resin composition). The individual components (resin and hardener) are mixed with the appropriate quantities of fillers and additives. The premixes are feeded into a batch mixer at a temperature of 60°C and injected into the mold preheated to 135°C and mold temperature is kept at this temperature until curing is completed. Cure time is 10h at a maximum temperature of 140°C. The exotherm as determined by Differential Scanning Calorimetry on a Mettler SC 822^{e} is 120 J/g.

APG trails with the compositions prepared in accordance with Examples 1 and 2, and Comparative Example are carried out by using as a mold a cylinder (length: 300 mm, diameter 60 mm). A release agent (QZ 66 available from Huntsman Corporation) is used. The total weight of the thermosetting casting resin composition injected under external pressure (about 3 bar) into the mold is approximately 1.1 kg.

**Table 1: Pot life**

| **Pot Life [min]** | at 25°C | at 40°C | at 60°C |
|---|---|---|---|
| Example 1 | 140 | 60 | |
| Comparative Example | 1040 | 240 | 130 |

**Table 2: Gel Time**

| **Gel Time [min]** | | at 40°C | at 50°C | at 60°C | at 80°C | at 90°C | at 100°C | at 120°C | at 140°C |
|---|---|---|---|---|---|---|---|---|---|
| | Example 1 | 165 | 106 | 62 | 26 | | 10.5 | | 3 |
| | Comparative Example | | | | 110 | 75 | 40 | 11 | 5 |

**Table 3: APG Processing, Tg and Shrinkage**

| | Age Mix [min]** | Fill time [sec] | Demold time [min] | Tg after demold*** | Post cure | Tg after post cure*** | Shrinkage [%] | |
|---|---|---|---|---|---|---|---|---|
| | | | | | | | Vol | Lin |
| Example 1 | 20 | 105 | 20 | 92 | 2h at 120°C | 109°C | 2.76 | 0.8 |
| Example 2 | 20 | 125 | 20 | 87 | 2h at 120°C | 107°C | 2.90 | 1.03 |
| Comparative Example | 20 | 90 | 30 | 95 | 8h at 130°C | 110°C | 2.55 | 0.60 |
| *wt% based on the total weight of the thermosetting resin composition | | | | | | | | |
| ** time after mixing in the batch mixer and before injection of the mix into the mold | | | | | | | | |
| *** Differential Scanning Calorimetry on a Mettler SC 822^{e} (range: 20 to 250°C at 10°C min⁻¹) | | | | | | | | |

The pot life of the thermosetting epoxy resin composition of Example 1 is sufficient to use common application techniques known in the art, as demonstrated by the data given in Table 1. The composition of Example 1 is distinguished by low odor emission. Odor emission of the composition of Comparative Example is much more intense. Advantageously, shorter curing times and lower curing temperatures can be applied in case of the composition of Example 1, as demonstrated by the gel time data given in Table 2. Moreover, the post-cure time can be substantially shortened and the post-cure temperature lowered, which is demonstrated by the corresponding data in Table 3. Furthermore, the data given in Table 3 demonstrate that the glass transition temperatures before and after post cure and shrinkage after post cure of the composition of Example 1 are in the same range as the properties of the known composition according to the Comparative Example.

**Table 4: Mechanical, Electrical and Dielectrical Properties after Post Cure**

| | Flex Strength [MPa] | Elongation [%] | E-Mod. [MPa] | K1C [MPa √m] | G1C [J m⁻²] | Dielectric loss factorTan delta (50Hz; 25°C) | Dielectr. Constant (50Hz; 25°C) |
|---|---|---|---|---|---|---|---|
| Example 1 | 114 | 1.5 | 9000 | 2.2 | 490 | 2.7 | 4.5 |
| Comparative Example | 130 | 1.2 | 12000 | 2.15 | 370 | 3.5 | |

Relevant mechanical properties of the cured composition of Example 1, such as crack resistance and toughness, are better or equal to the properties of the cured composition of the Comparative Example. Basic electrical and dielectrical properties of the cured composition of Example 1 are also comparable to the properties of the cured composition of the Comparative Example, as demonstrated by the data given in Table 4.

## Claims

1. A process for the preparation of insulation systems for electrical engineering by automatic pressure gelation (APG), wherein
a multiple component thermosetting resin composition is used, said resin composition comprising
(A) at least one epoxy resin, and
(B) at least one curing agent comprising
(b1) at least one cycloaliphatic amine, and
(b2) at least one polyetheramine,
wherein the said at least one curing agent component (b2) is a JEFFAMINE^{®} XTJ polyetheramine, which is a primary amine with the terminal end group of the formula 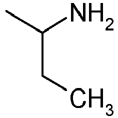 prepared by amination of butylene oxide capped alcohols.

2. The process according to claim 1, wherein the said at least one epoxy resin (A) is a diglycidylether of bisphenol A.

3. The process according to either claim 1 or claim 2, wherein the said at least one curing agent component (b1) is 1,2-diaminocyclohexane, bis(4-aminocyclohexyl)methane, 2,2-bis-(4-aminocyclohexyl)propane, 2,2-bis(4-amino-3-methylcylohexyl)propane, 3-aminomethyl-3,5,5-trimethylcyclohexylamine (isophorone diamine), 1,4-bis(aminomethyl)cyclohexane, 1,3-bis(aminomethyl)cyclohexane, bicyclo[2.2. 1]heptanebis(methylamine) (norbornane diamine), 3,3,5-trimethyl-N-(propan-2-yl)-5-[(propan-2-ylamino)methyl]cyclohexamine, Jefflink JL 754, or N-aminoethylpiperazine.

4. The process according to any one of claims 1 to 3, wherein the said at least one curing agent component (b1) is 1,2-diaminocyclohexane, bis(4-aminocyclohexyl)methane, 3-aminomethyl-3,5,5-trimethylcyclohexylamine (isophorone diamine), 1,3-bis(aminomethyl)cyclohexane, bicyclo[2.2.1]heptanebis(methylamine) (norbornane diamine), Jefflink JL 754, or N-aminoethylpiperazine.

5. The process according to any one of claims 1 to 4, wherein the said at least one curing agent component (b1) is 3-aminomethyl-3,5,5-trimethylcyclohexylamine (isophorone diamine).

6. The process according to any one of claims 1 to 5, wherein the said resin composition comprises
(A) a diglycidylether of bisphenol A,
(B) a curing agent comprising
(b1) 3-aminomethyl-3,5,5-trimethylcyclohexylamine (isophorone diamine), and
(b2) JEFFAMINE^{®} XTJ-568.

7. The use of a multiple component thermosetting resin composition comprising
(A) at least one epoxy resin
(B) at least one curing agent comprising
(b1) at least one cycloaliphatic amine, and
(b2) at least one polyetheramine,
wherein the said at least one curing agent component (b2) is a JEFFAMINE^{®} XTJ polyetheramine, which is a primary amine with the terminal end group of the formula 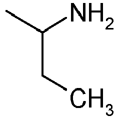 prepared by amination of butylene oxide capped alcohols,
for the preparation of insulation systems for electrical engineering by automatic pressure gelation (APG).

8. Use of an insulation system obtained by the process according to any of claims 1 to 6 for medium and high voltage switchgear applications and as medium and high voltage instrument transformers.

## Patentansprüche

1. Verfahren zur Herstellung von Systemen zur Isolierung von Elektrotechnik durch automatische Druckgelierung (APG), wobei
eine wärmehärtende Mehrkomponenten-Harzzusammensetzung verwendet wird, wobei die Harzzusammensetzung
(A) wenigstens Epoxidharz und
(B) wenigstens ein Härtungsmittel, umfassend
(b1) wenigstens ein cycloaliphatisches Amin und
(b2) wenigstens ein Polyetheramin,
umfasst,
wobei die besagte wenigstens eine Härtungsmittelkomponente (b2) ein JEFFAMINE^{®} XTJ Polyetheramin ist, das ein primäres Amin mit der terminalen Endgruppe der Formel 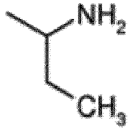 ist, hergestellt durch Aminierung von mit Butylenoxid überkappten Alkoholen.

2. Verfahren nach Anspruch 1, wobei das besagte wenigstens eine Epoxidharz (A) ein Diglycidylether von Bisphenol A ist.

3. Verfahren nach entweder Anspruch 1 oder Anspruch 2, wobei die besagte wenigstens eine Härtungsmittelkomponente (b1) 1,2-Diaminocyclohexan, Bis(4-aminocyclohexyl)methan, 2,2-Bis-(4-aminocyclohexyl)propan, 2,2-Bis(4-amino-3-methylcyclohexyl)propan, 3-Aminomethyl-3,5,5-trimethylcyclohexylamin (Isophorondiamin), 1,4-Bis(aminomethyl)cyclohexan, 1,3-Bis(aminomethyl)cyclohexan, Bicyclo[2.2.1]heptanbis(methylamin) (Norbornandiamin), 3,3,5-Trimethyl-N-(propan-2-yl)-5-[(propan-2-ylamino)methyl]cyclohexylamin, Jefflink JL 754 oder N-Aminoethylpiperazin ist.

4. Verfahren nach einem der Ansprüche 1 bis 3, wobei die besagte wenigstens eine Härtungsmittelkomponente (b1) 1,2-Diaminocyclohexan, Bis(4-aminocyclohexyl)methan, 3-Aminomethyl-3,5,5-trimethylcyclohexylamin (Isophorondiamin), 1,3-Bis(aminomethyl)cyclohexan, Bicyclo[2.2.1]heptanbis(methylamin) (Norbonandiamin), Jefflink JL 754 oder N-Aminoethylpiperazin ist.

5. Verfahren nach einem der Ansprüche 1 bis 4, wobei die besagte wenigstens eine Härtungsmittelkomponente (b1) 3-Aminomethyl-3,5,5-trimethylcyclohexylamin (Isophorondiamin) ist.

6. Verfahren nach einem der Ansprüche 1 bis 5, wobei die besagte Harzzusammensetzung
(A) einen Diglycidylether von Bisphenol A,
(B) ein Härtungsmittel, umfassend
(b1) 3-Aminomethyl-3,5,5-trimethylcyclohexylamin (Isophorondiamin) und
(b2) JEFFAMINE^{®} XTJ-568,
umfasst.

7. Verwendung einer wärmehärtenden Mehrkomponenten-Harzzusammensetzung, umfassend
(A) wenigstens ein Epoxidharz,
(B) wenigstens ein Härtungsmittel, umfassend
(b1) wenigstens ein cycloaliphatisches Amin und
(b2) wenigstens ein Polyetheramin,
wobei die besagte wenigstens eine Härtungsmittelkomponente (b2) ein JEFFAMINE^{®} XTJ Polyetheramin ist, das ein primäres Amin mit der terminalen Endgruppe der Formel 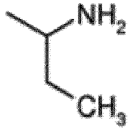 ist, hergestellt durch Aminierung von mit Butylenoxid überkappten Alkoholen,
zur Herstellung von Systemen zur Isolierung von Elektrotechnik durch automatische Druckgelierung (APG).

8. Verwendung eines Systems zur Isolierung, erhalten mit dem Verfahren nach einem der Ansprüche 1 bis 6, für Mittel- und Hochspannungs-Schaltvorrichtungsanwendungen und als Mittel- und Hochspannungs-Wandler.

## Revendications

1. Procédé pour la préparation de systèmes d'isolation pour l'électrotechnique par gélification sous pression automatique (APG), dans lequel
une composition de résine thermodurcissable à composants multiples est utilisée, ladite composition de résine comprenant
(A) au moins une résine époxy, et
(B) au moins un agent de durcissement comprenant
(b1) au moins une amine cycloaliphatique, et
(b2) au moins une polyétheramine,
dans lequel ledit au moins un composant agent de durcissement (b2) est une polyétheramine JEFFAMINE^{®} XTJ, qui est une amine primaire avec le groupe terminal de formule 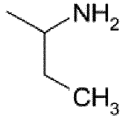 préparée par amination d'alcools coiffés d'oxyde de butylène.

2. Procédé selon la revendication 1, dans lequel ladite au moins une résine époxy (A) est un éther diglycidylique de bisphénol A.

3. Procédé selon l'une ou l'autre de la revendication 1 et de la revendication 2, dans lequel ledit au moins un composant agent de durcissement (b1) est le 1,2-diaminocyclohexane, le bis(4-aminocyclohexyl)méthane, le 2,2-bis-(4-aminocyclohexyl)propane, le 2,2-bis(4-amino-3-méthylcylohexyl)propane, la 3-aminométhyl-3,5,5-triméthylcyclohexylamine (isophorone diamine), le 1,4-bis(aminométhyl)cyclohexane, le 1,3-bis(aminométhyl)cyclohexane, la bicyclo[2.2.1]heptanebis(méthylamine) (norbornane diamine), la 3,3,5-triméthyl-N-(propan-2-yl)-5-[(propan-2-ylamino)méthyl]cyclohexamine, le Jefflink JL 754, ou la N-aminoéthylpipérazine.

4. Procédé selon l'une quelconque des revendications 1 à 3, dans lequel ledit au moins un composant agent de durcissement (b1) est le 1,2-diaminocyclohexane, le bis(4-aminocyclohexyl)méthane, la 3-aminométhyl-3,5,5-triméthylcyclohexylamine (isophorone diamine), le 1,3-bis(aminométhyl)cyclohexane, la bicyclo[2.2.1]heptanebis(méthylamine) (norbornane diamine), le Jefflink JL 754, ou la N-aminoéthylpipérazine.

5. Procédé selon l'une quelconque des revendications 1 à 4, dans lequel ledit au moins un composant agent de durcissement (b1) est la 3-aminométhyl-3,5,5-triméthylcyclohexylamine (isophorone diamine).

6. Procédé selon l'une quelconque des revendications 1 à 5, dans lequel ladite composition de résine comprend
(A) un éther diglycidylique de bisphénol A,
(B) un agent de durcissement comprenant
(b1) de la 3-aminométhyl-3,5,5-triméthylcyclohexylamine (isophorone diamine), et
(b2) du JEFFAMINE^{®} XTJ-568.

7. Utilisation d'une composition de résine thermodurcissable à composants multiples comprenant
(A) au moins une résine époxy
(B) au moins un agent de durcissement comprenant
(b1) au moins une amine cycloaliphatique, et
(b2) au moins une polyétheramine,
dans lequel ledit au moins un composant agent de durcissement (b2) est une polyétheramine JEFFAMINE^{®} XTJ, qui est une amine primaire avec le groupe terminal de formule 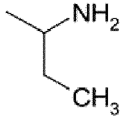 préparée par amination d'alcools coiffés d'oxyde de butylène,
pour la préparation de systèmes d'isolation pour l'électrotechnique par gélification sous pression automatique (APG).

8. Utilisation d'un système d'isolation obtenu par le procédé selon l'une quelconque des revendications 1 à 6 pour des applications d'appareillage de commutation moyenne et haute tension et comme transformateurs d'instrumentation moyenne et haute tension.
